# FASCICULE DE BREVET EUROPEEN

(11) **EP 2 764 281 B1**
(45) Date de publication et mention de la délivrance du brevet: **29.04.2020**
(21) Numéro de dépôt: 12773053.9
(22) Date de dépôt: 18.09.2012
(51) Int. Cl.: F16H 63/50, B60W 30/184

(54) **PROCEDE ET SYSTEME DE COMMANDE D'UN GROUPE MOTOPROPULSEUR EN FONCTION DE LA TEMPERATURE D'UN CONVERTISSEUR DE COUPLE HYDRAULIQUE**
VERFAHREN UND SYSTEM ZUR STEUERUNG EINES ANTRIEBSSTRANGS IN ABHÄNGIGKEIT VON DER TEMPERATUR EINES HYDRAULISCHEN DREHMOMENTWANDLERS
METHOD AND SYSTEM FOR CONTROLLING A POWER TRAIN DEPENDING ON THE TEMPERATURE OF A HYDRAULIC TORQUE CONVERTER

(30) Priorité: 06.10.2011 FR 1159032
(43) Date de publication de la demande: 13.08.2014
(73) Titulaire: Renault S.A.S., 92100 Boulogne-Billancourt (FR)
(72) Inventeur: PLANTE, François, 91750 Champcueil (FR)
(86) Numéro de dépôt international: PCT/FR2012/052082
(87) Numéro de publication internationale: WO 2013/050681

(56) Documents cités:
- DE-A1-102006 055 152
- FR-A1- 2 928 193
- GB-A- 2 320 339
- JP-A- 10 169 771
- US-A1- 2011 190 993

## Description

L'invention concerne la commande d'un groupe motopropulseur, et plus particulièrement une commande d'un groupe motopropulseur couplé en fonction de la température de l'huile d'un convertisseur de couple hydraulique.

Un convertisseur de couple correspond à un type d'accouplement hydraulique employé pour transmettre à partir d'un arbre moteur une puissance à une charge conduite tournante. Le convertisseur de couple hydraulique remplace généralement un embrayage mécanique en permettant à la charge d'être isolée de la source de puissance, c'est-à-dire dans le cas d'un véhicule automobile de mécaniquement découpler la chaîne cinématique comprenant l'arbre couplé à une roue du moteur. Un convertisseur de couple hydraulique permet également de réaliser une démultiplication, c'est-à-dire d'augmenter le couple quand les vitesses de rotation d'entrée et de sortie sont différentes en devenant l'équivalent d'un réducteur mécanique.

Un convertisseur de couple hydraulique comprend une pompe, un stator et une turbine montés dans un carter commun dans lequel l'huile assure la transmission du couple et y circule en circuit fermé.

L'usage hors route d'un véhicule automobile, en particulier lors du gravissement de fortes pentes ou lors d'une évolution dans du sable ou un bourbier profond par exemple, peut avoir pour conséquence l'entretien pendant un long moment de conditions très voisines des conditions de décollage. C'est-à-dire que le véhicule automobile peut avoir pendant une période relativement longue une vitesse proche de zéro ou faible de façon générale, alors que le moteur développe un couple important.

Dans ces conditions, pour le cas de véhicules automobiles équipés de transmissions automatiques à convertisseur de couple hydraulique, l'énergie nécessaire à transmettre à la chaîne cinématique doit être maximale pour pouvoir simplement quitter l'endroit où se trouve le véhicule. De par le principe même de fonctionnement d'un convertisseur de couple hydraulique, le couple maximal transmis ne peut être obtenu que dans le cas où ce convertisseur est à un niveau maximal de découplage, qui, si le moteur est alors utilisé à son maximum de performances, conduit à un cisaillement maximal de l'huile qui s'y trouve. Ceci se traduit par une perte de transmission de puissance du moteur vers la chaîne cinématique due à l'échauffement de l'huile dans le convertisseur de couple hydraulique. En effet, à chaque instant où le régime moteur est supérieur au régime de la turbine, le bilan des puissances montre explicitement que le cisaillement de l'huile se traduit par une dissipation de puissance égale à la différence entre la puissance amenée par le moteur, correspondant au produit du couple moteur et du régime vilebrequin, et la puissance transmise par le convertisseur à la turbine, correspondant au produit du couple de sortie du convertisseur et du régime de la turbine.

De plus, la surchauffe de l'huile au-delà de certains seuils de température conduit à la casse d'éléments constitutifs de la transmission automatique. Le niveau de sollicitation thermique d'un convertisseur de couple hydraulique limite donc la possibilité de franchir des zones à forte résistance à l'avancement comme des zones à forte pente par exemple.

Le problème de surchauffe de l'huile est lié à l'impossibilité de prévoir les conditions de roulage du véhicule automobile. Les conditions de roulage d'un véhicule automobile étant en partie liée à la masse du véhicule et à la force de résistance à l'avancement du véhicule automobile, la force de résistance à l'avancement pouvant correspondre à la pente que le véhicule automobile est en train de gravir et/ou à la nature du terrain dans lequel le véhicule automobile évolue.

Les solutions existantes tentant de s'affranchir de cette contrainte thermique et de garantir une fiabilité et une durabilité des éléments constitutifs de la transmission, le font cependant au détriment de la capacité de franchissement du véhicule, c'est-à-dire de la capacité à gravir des pentes ou franchir des zones profondes.

La plupart des véhicules automobiles capables de gravir des pentes fortes sont équipées de réducteurs de transmission réalisant un raccourcissement des rapports de transmission permettant de franchir les zones à force de résistance à l'avancement importante quasiment sans jamais atteindre les limites autorisées de sollicitation thermique de l'huile, ou de façon quasi marginale. La charge ramenée au niveau du convertisseur est à ce point réduite que le véhicule prend vite de la vitesse.

La turbine du convertisseur hydraulique est mécaniquement liée aux roues motrices du véhicule par l'intermédiaire d'une transmission avec un rapport de transmission donné. Alors, dans le cas où on se sert de la gamme dite courte de rapports de transmission, le cisaillement de l'huile dans le convertisseur diminue. Généralement, le point de cisaillement maximal obtenu dans cette configuration là est ainsi repoussé vers des valeurs de ratio entre la masse pratique du véhicule et la pente bien au-delà de toute utilisation raisonnable.

Le problème est que, pour des raisons de coûts financiers, un véhicule automobile n'est pas toujours équipé d'un dispositif de réduction de la démultiplication des rapports de la transmission automatique, et le rapport le plus démultipliant l'est moins que ce qu'on connait habituellement avec une boîte mécanique traditionnelle, de par l'architecture même de ce type de transmission. Ceci fait que pour l'ampleur de la force de résistance à l'avancement, c'est-à-dire l'ampleur des pentes ou la nature des terrains, on est souvent dans des conditions de sollicitation thermiques maximales, c'est-à-dire des conditions de cisaillement maximal de l'huile dans le convertisseur de couple hydraulique provoquant une surchauffe de l'huile.

Une solution connue propose de mesurer la température de l'huile du convertisseur de couple hydraulique, puis lorsque le risque de surchauffe est considéré comme important, de court-circuiter le convertisseur hydraulique de couple par serrage d'un embrayage de friction en parallèle du convertisseur, et/ou d'abaisser brutalement le débit d'énergie dans l'huile par l'écroulement du couple moteur.

Cependant, dans ce cas, le couple transmis à la chaîne cinématique devient brutalement insuffisant. Dans le cas d'une pente à gravir par exemple, la force de gravité, constante, l'emporte alors sur la force motrice, et l'équilibre des forces auxquelles le véhicule automobile est soumis est rompu. Le véhicule recule alors d'un coup sans que rien ne prévienne le conducteur de l'imminence de cet événement, et dans une direction qui n'est souvent pas celle naturelle en rapport avec l'orientation du poste de conduite. Dans le cas d'un terrain tel que du sable ou un bourbier, le véhicule s'immobilise brutalement.

Le document US 2011/0054749 propose de piloter le couple moteur pour limiter le débit de sollicitation thermique de l'huile, en s'appuyant sur un asservissement de ce couple moteur à la valeur mesurée de la température d'huile de la transmission hydraulique de façon à ne jamais dépasser une valeur dite critique de température d'huile.

Cependant, l'action sur le couple moteur est un procédé de type proportionnel intégral dérivé (PID) réalisé directement à partir de l'information relative à la température d'huile pour satisfaire un critère vis-à-vis d'une valeur critique. Un tel asservissement par rapport à la température d'huile ne permet pas d'anticiper le comportement du véhicule à tout instant. Ne pouvant pas prédire le comportement du véhicule automobile, le réglage de la température critique interdit des excursions temporaires de la température d'huile vers des températures de l'huile supérieures à la température critique permettant de donner une force de franchissement supplémentaire pendant un court laps de temps sans mettre pour autant en péril les éléments constitutifs du convertisseur de couple hydraulique ou du système de pilotage hydraulique de la transmission.

De plus, l'application est circonscrite au seul cas du « point de calage », donc impliquant l'exploitation de l'information sur le frein principal.

Les documents GB 2 320 339 et JP10169771 divulguent chacun un système et un procédé de commande comprenant toutes les caractéristiques du préambule des revendications indépendantes 1 et 7.

Un objectif de l'invention est de pallier ces inconvénients et donc de pouvoir réaliser à chaque instant le meilleur compromis possible entre la tenue thermique du convertisseur de couple hydraulique ou du système de pilotage hydraulique de la transmission considéré et la force maximale exercée à l'encontre de la force de résistance à l'avancement. Il s'agit donc de conserver une force de franchissement maximale exercée à l'encontre de la force de résistance à l'avancement, quelle que soit la masse du véhicule, et conserver à chaque instant ladite force de franchissement maximale en contournant cette contrainte thermique. Et ce sans utiliser de capteurs ou de moyens supplémentaires permettant de renseigner des informations sur les conditions de charge du véhicule automobile imposées par le terrain.

Un autre but de l'invention est de bénéficier d'une réserve de force de franchissement permettant le franchissement d'obstacle tel que des souches ou des trous alors que le véhicule se trouve déjà dans une zone à forte résistance à l'avancement, comme une pente ou un terrain sableux, et ce sans risquer de dégrader les éléments constitutifs du convertisseur de couple hydraulique ou du système de pilotage hydraulique de la transmission.

Selon un aspect de l'invention, il est proposé, dans un mode de mise en œuvre, un procédé de commande d'un groupe motopropulseur d'un véhicule automobile, le groupe motopropulseur étant apte à délivrer un couple moteur à un convertisseur de couple hydraulique.

Selon une caractéristique générale, le procédé comprend la détermination d'un gradient de température de l'huile du convertisseur de couple hydraulique du convertisseur de couple hydraulique, l'estimation d'une courbe de force de résistance à l'avancement du véhicule automobile en fonction d'une masse pratique du véhicule automobile à partir dudit gradient de température, et un asservissement dudit couple moteur en fonction de ladite estimation.

Un tel procédé permet ainsi d'estimer un couple relatif associant une force de résistance à l'avancement et une masse pratique du véhicule automobile sans utiliser de capteurs ou d'actionneurs supplémentaires. La masse pratique du véhicule correspond à la somme de la masse du véhicule automobile avec la masse des personnes et des marchandises, et/ou d'une remorque tractée.

La gestion en temps réel et de façon continue de l'adaptation du couple moteur aux circonstances environnantes, c'est-à-dire à la force de résistance à l'avancement du véhicule, permet d'anticiper le comportement du véhicule automobile et, par conséquent, de donner un maximum de confiance au conducteur dans le comportement de son véhicule automobile qui reste homogène et prévisible. En asservissant le couple moteur transmis au convertisseur de couple hydraulique par rapport à la courbe estimée de force de résistance à l'avancement en fonction de la masse pratique, il est possible d'anticiper les situations critiques et d'éviter une rupture de couple aux roues liée à une telle situation. Les corrections circonstancielles du couple appliqué aux roues ne sont jamais brutales, ne projetant pas, sans prévenir, le conducteur et son véhicule dans des situations périlleuses pouvant manifestement les mettre instantanément en danger, ainsi que les passagers ou tiers.

Avantageusement, le gradient de température est déterminé à partir de la différence entre deux mesures de température de l'huile séparées d'une période critique.

La détermination du gradient de température permet de déduire le temps durant lequel le véhicule peut fonctionner avec un régime et un couple moteur important avant d'atteindre une température de surchauffe de l'huile, et ainsi d'anticiper le comportement du véhicule automobile. La détermination du gradient de température permet donc de connaître le temps pendant lequel le couple moteur maximal permettant d'obtenir une force de franchissement maximale est disponible pour une courbe de force de résistance à l'avancement en fonction de la masse pratique donnée.

De préférence, l'asservissement du couple moteur réalise une limitation du couple moteur lorsque la courbe de force de résistance à l'avancement en fonction d'une masse pratique estimée est comprise entre une courbe d'iso-sollicitation thermique statique et une courbe d'iso-sollicitation thermique maximale.

La courbe d'iso-sollicitation thermique statique peut avantageusement correspondre à la force maximale de résistance à l'avancement en fonction de la masse pratique pour laquelle la température de l'huile reste inférieure à une température de surchauffe quelle que soit la valeur du couple moteur et le temps pendant lequel il est développé.

La température de surchauffe de l'huile correspond à la température de l'huile à partir de laquelle il existe un risque de dégradation des éléments du convertisseur de couple hydraulique si une telle température ou une température supérieure est maintenue pendant un temps même relativement court.

La courbe d'iso-sollicitation thermique maximale peut avantageusement correspondre à force de résistance à l'avancement en fonction de la masse pratique du point de calage du convertisseur de couple.

Lorsque la courbe estimée de force de résistance à l'avancement en fonction d'une masse pratique est inférieure à la courbe d'iso-sollicitation thermique statique, le convertisseur de couple hydraulique se trouve dans des conditions de fonctionnement sans risque de surchauffe de l'huile. Le couple moteur n'a donc pas besoin d'être limité pour réduire la température de l'huile.

La courbe d'iso-sollicitation thermique maximale correspondant au point de calage est, pour des caractéristiques données du moteur, du convertisseur hydraulique, de la transmission et de la masse du véhicule, et pour des conditions maximales de température ambiante du véhicule ou de température du compartiment moteur, une limite absolue pratique, au sens où il n'arrivera jamais de se trouver dans une situation où la sollicitation thermique soit supérieure à ce cas de figure là.

Si la force de résistance à l'avancement est très forte, malgré le rapport de transmission engagé, le régime de la turbine du convertisseur de couple est presque nul alors que le régime moteur, imposé à la pompe de la turbine, est relativement élevé. Le point dit de calage du convertisseur de couple correspond à une valeur d'équilibre des forces en action, en l'occurrence la force du couple moteur et la force de résistance à l'avancement. Le point de calage du convertisseur de couple est atteint lorsqu'à une masse pratique donnée, la force de résistance à l'avancement est égale à la force issue du couple moteur maximal disponible en cas de cisaillement maximal du convertisseur, et démultiplié par le convertisseur hydraulique et la transmission automatique jusqu'aux roues.

Avantageusement, l'asservissement du couple moteur est activé lorsque la température de l'huile est supérieure à une température d'activation.

De préférence, la température d'activation correspond à la température maximale observée pour des conditions normales de roulage du véhicule.

L'asservissement n'étant utile que lorsque la température de l'huile s'approche d'une température de surchauffe, l'asservissement peut n'être activé qu'à partir d'une valeur de température de l'huile supérieure à une température de l'huile représentative des conditions normales de roulage, c'est-à-dire des conditions de roulage sur route goudronnée.

De préférence, la période critique correspond au temps que met l'huile pour passer de la température d'activation à ladite température de surchauffe lorsque le gradient de température correspond au gradient de température du point de calage.

Selon un autre aspect de l'invention, il est proposé dans un mode de réalisation, un système de commande d'un groupe motopropulseur d'un véhicule automobile, le groupe motopropulseur étant apte à délivrer un couple moteur à un convertisseur de couple.

Selon une caractéristique générale, le système comprend des moyens de détermination d'un gradient de température de l'huile du convertisseur de couple hydraulique, des moyens d'estimation d'une courbe de force de résistance à l'avancement du véhicule automobile en fonction d'une masse pratique du véhicule automobile à partir dudit gradient de température, et des moyens d'asservissement dudit couple moteur en fonction de ladite estimation.

De préférence, le système comprend un capteur de température apte à mesurer la température de l'huile dans le convertisseur hydraulique et couplé au module de détermination, le module de détermination déterminant le gradient de température à partir de la différence entre deux mesures de température de l'huile séparées de la période critique.

Avantageusement, les moyens d'asservissement peuvent comprendre un module de limitation du couple moteur apte à déterminer un couple moteur limité lorsque la courbe de force de résistance à l'avancement en fonction d'une masse pratique estimée est comprise entre une courbe d'iso-sollicitation thermique statique et une courbe d'iso-sollicitation thermique maximale, la courbe d'iso-sollicitation thermique statique correspondant à la force maximale de résistance à l'avancement en fonction de la masse pratique pour laquelle la température de l'huile reste inférieure à une température de surchauffe quelle que soit la valeur du couple moteur et le temps pendant lequel il est développé, et la courbe d'iso-sollicitation thermique maximale peut avantageusement correspondre à force de résistance à l'avancement en fonction de la masse pratique du point de calage du convertisseur de couple.

Le système peut également comprendre un module d'activation couplé au capteur de température couplé au capteur de température et apte à activer le système de commande lorsque la température de l'huile est supérieure à une température d'activation, la température d'activation correspondant à la température maximale observée pour des conditions normales de roulage du véhicule.

Le module d'activation peut également être apte à désactiver le système de commande lorsque la température de l'huile est inférieure à une température de désactivation, la température de désactivation correspondant à une température indicative d'un retour à des conditions normales de roulage du véhicule.

D'autres avantages et caractéristiques de l'invention apparaîtront à l'examen de la description détaillée de modes de mise en œuvre et de modes de réalisation, nullement limitatifs, et des dessins annexés, sur lesquels :
- La figure 1 représente schématiquement une portion de véhicule automobile comprenant un exemple de système de commande d'un groupe motopropulseur selon un mode de réalisation de l'invention ;

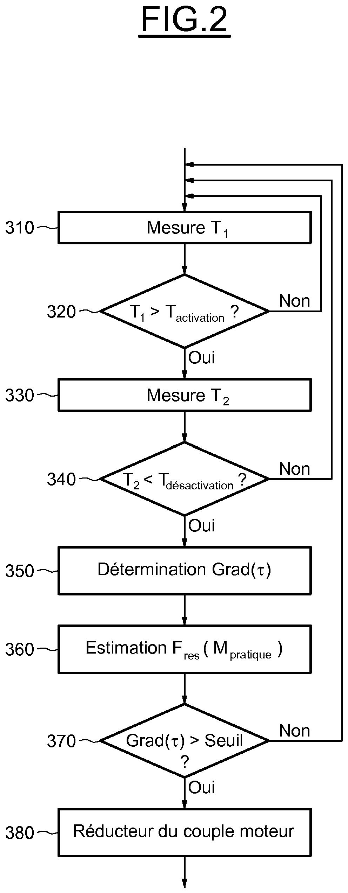

- La figure 2 présente un organigramme d'un exemple de procédé de commande d'un groupe motopropulseur selon un mode de mise en œuvre de l'invention ;
- La figure 3 illustre des courbes d'iso-sollicitation thermique pour une force de résistance à l'avancement en fonction d'une masse pratique d'un véhicule automobile ;
- La figure 4 illustre des courbes de variation de la température de l'huile en fonction du temps.

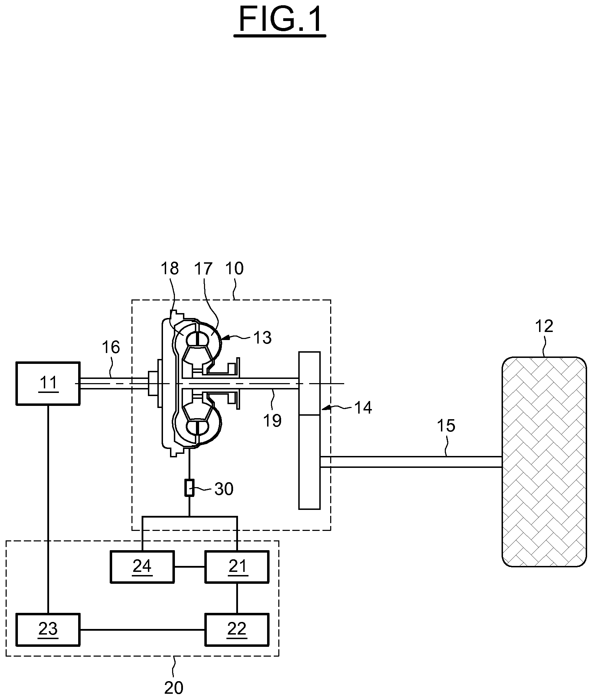

Sur la figure 1 est représentée de manière schématique une portion d'un véhicule automobile comprenant un exemple de système de commande d'un groupe motopropulseur selon un mode de réalisation de l'invention.

Le véhicule automobile comprend une boîte de transmission 10 automatique couplée entre un moteur 11 et au moins une roue 12. La boîte de transmission 10 comprend un convertisseur de couple hydraulique 13 et une transmission, ou boîte de vitesse 14 automatique. Le convertisseur de couple hydraulique 13 est inséré entre le moteur 11 et la boîte de vitesse 14 qui est raccordée mécaniquement à la roue 12 via un arbre 15 de la chaîne cinématique.

Le convertisseur de couple 13 génère, à partir du couple moteur transmis via un vilebrequin 16 du moteur 11 à une pompe 17 du convertisseur de couple 13, un couple de transmission délivré par une turbine 18 du convertisseur de couple 13 à la boîte de vitesse 14 via un arbre primaire 19. Le couple de transmission est généré par l'huile comprise dans le convertisseur de couple hydraulique 13 mise en mouvement par la rotation de la pompe 17.

Le véhicule automobile comprend un système de commande 20 du moteur 11 apte commander le couple moteur délivré par le moteur 11 en fonction de la température de l'huile du convertisseur de couple hydraulique 13 de la boîte de transmission automatique 10 du véhicule automobile. Le système de commande 20 comprend des moyens de détermination 21 d'un gradient de température de l'huile aptes à déterminer un gradient de température à partir de mesures de la température de l'huile réalisées par un capteur de température 30, des moyens d'estimation 22 d'une courbe de force de résistance à l'avancement du véhicule automobile en fonction d'une masse pratique du véhicule automobile à partir dudit gradient de température, et des moyens d'asservissement 23 du couple moteur en fonction de l'estimation aptes commander le moteur 11. Le système de commande 20 comprend également un module d'activation 24 couplé au capteur de température 30 et au moyens de détermination 21 et aptes à activer le système de commande via les moyens de détermination 21 lorsque la température de l'huile est supérieure à un seuil d'activation T_{activation}.

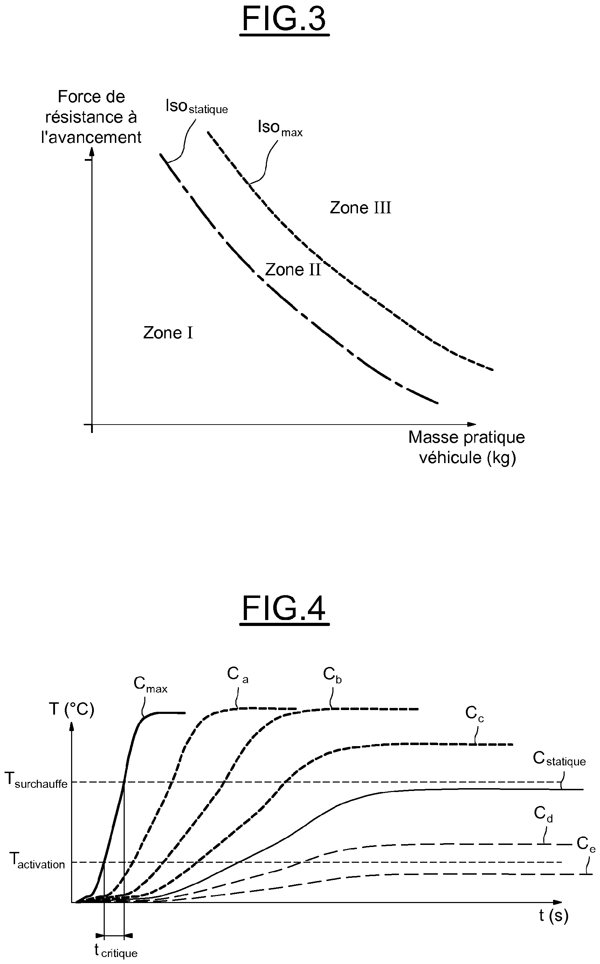

Dans un mode de mise en œuvre, le système de commande 20 fonctionne selon l'exemple de procédé de commande du convertisseur de couple hydraulique 13 présenté sur l'organigramme de la figure 3.

Dans une première étape 310, le capteur de température 30 mesure une première température T₁ de l'huile comprise dans le convertisseur de couple hydraulique 13.

Lors du fonctionnement du véhicule automobile, le convertisseur de couple 13 assurant la génération d'un couple de transmission à la boîte de vitesse 14 via l'arbre primaire 19 couplé à la turbine 18 du convertisseur de couple 13 à partir d'un couple moteur généré par le moteur 11 et transmis à la pompe 17 du convertisseur de couple 13 via le vilebrequin 16. Le couple de transmission est généré par la mise en mouvement, et plus particulièrement la mise en en rotation, de l'huile par la pompe 17 du convertisseur de couple 13. La différence de couple entre le couple moteur sur la pompe 17 et le couple de transmission sur la turbine 18 provoque un cisaillement de l'huile et par conséquent une dissipation d'énergie par échauffement de l'huile.

Lors du fonctionnement normal du véhicule automobile, c'est-à-dire lors d'un fonctionnement sur route goudronnée, avec des conditions moyennes de roulage, la température de l'huile possède une valeur moyenne de roulage. Cette valeur moyenne de roulage, ou une valeur relativement supérieure, correspond à la température du seuil d'activation T_{activation} du système de commande 20 par les moyens d'activation 24.

Ainsi, après la mesure de la première température T₁, on compare dans une étape suivante 320, la première température T₁ de l'huile au seuil d'activation T_{activation}. Si la première température T₁ est inférieure au seuil d'activation T_{activation}, le système de commande 20 reste inactivé.

En revanche, si la première température T₁ est supérieure au seuil d'activation T_{activation}, le système de commande est activé.

Dans une étape suivante 330, le capteur de température 30 réalise une mesure d'une seconde température T₂ de l'huile. La mesure de la seconde température T₂ est réalisée après qu'une période critique t_{critique} se soit écoulée depuis la mesure de la première température T₁.

La période critique t_{critique} correspond au temps que met l'huile pour passer de la température correspondant au seuil activation T_{activation} à une température de surchauffe T_{surchauffe} lorsque les conditions se trouvent sur le point de calage, c'est-à-dire lorsque le gradient de température correspond au gradient de température du point de calage, comme cela est illustré par la courbe Cₘₐₓ sur la figure 4 sur laquelle sont représentées des courbes de variation de la température T de l'huile en fonction du temps t.

Dans une étape suivante 340, la seconde température T₂ est comparée à un seuil de désactivation T_{désactivation}. Si la seconde température T₂ est inférieure à ce seuil de désactivation T_{désactivation}, le système de commande 20 est désactivé.

Dans une variante, la première température T₁ peut être utilisée pour la comparaison de l'étape 340 au lieu de la seconde température T₂.

La température de surchauffe T_{surchauffe} de l'huile correspond à la température de l'huile à partir de laquelle il existe un risque de dégradation des éléments du convertisseur de couple hydraulique 13 si une telle température ou une température supérieure est maintenue pendant un temps même relativement court.

Le gradient de température *Grad(T)* est déterminé à partir de la première température T₁, de la seconde température T₂ et de la période critique t_{critique}. Le point de calage du convertisseur de couple 13 est atteint lorsqu'à une masse pratique donnée, la force de résistance à l'avancement du véhicule automobile est égale à la force issue du couple moteur maximal développée par le moteur 11 disponible en cas de cisaillement maximal du convertisseur, et démultiplié par le convertisseur hydraulique et la transmission automatique jusqu'aux roues. La courbe d'iso-sollicitation thermique maximale *Isoₘₐₓ* illustrée sur la figure 4 correspond au point de calage.

Dans une étape suivante 350, les moyens de détermination 21 déterminent le gradient de température *Grad(T)* entre les première et seconde températures T₁ et T₂ pour la période critique t_{critique}.

Le gradient de température *Grad(T)* ainsi déterminé permet de déduire sans utiliser de données issues de capteurs supplémentaires, la force de résistance à l'avancement que le véhicule subit par rapport à sa masse pratique, c'est-à-dire d'estimer la pente et/ou la nature du terrain sur lequel le véhicule se trouve. Cette estimation permet ainsi de connaître les conditions environnementales du véhicule automobile et de prévoir les conditions de fonctionnement envisageables, ou disponibles, pour le véhicule automobile.

Les moyens d'estimation 22 réalisent ainsi, dans une étape suivante 360, l'estimation d'une courbe de force de résistance à l'avancement du véhicule automobile en fonction d'une masse pratique du véhicule automobile à partir du gradient de température *Grad(T)* déterminée dans l'étape précédente 350.

On compare ensuite, dans une étape 370, la courbe estimée dans l'étape précédente 360 à une courbe seuil, correspondant à une courbe d'iso-sollicitation thermique statique *Iso_{statique}* illustrée sur la figure 4.

La courbe d'iso-sollicitation thermique statique *Iso_{statique}* correspond à la force maximale de résistance à l'avancement en fonction de la masse pratique pour laquelle la température de l'huile reste inférieure à la température de surchauffe T_{surchauffe} quelle que soit la valeur du couple moteur et le temps pendant lequel celui-ci est développé. Les courbes d'iso-sollicitation dépendent des caractéristiques des échangeurs thermiques associés au convertisseur de couple hydraulique 13, et des capacités de décollage souhaitées.

Un exemple de courbe de température de l'huile pour des conditions de roulage s'approchant de ou correspondant à la courbe d'iso-sollicitation thermique statique *Iso_{statique}* est représentée par la courbe C_{statique} sur la figure 4.

Lorsque la courbe estimée de force de résistance à l'avancement en fonction d'une masse pratique est inférieure à la courbe d'iso-sollicitation thermique statique *Iso_{statique}, zone I* sur la figure 3, le convertisseur de couple hydraulique 13 se trouve dans des conditions de fonctionnement où la température de l'huile ne risque pas de dépasser la température de surchauffe T_{surchauffe}, comme illustré par les courbes C_{statique} et C_{d} sur la figure 4. Le couple moteur n'a donc pas besoin d'être limité pour réduire la température de l'huile, et le procédé recommence à la première étape 310.

Lorsque la courbe de force de résistance à l'avancement en fonction d'une masse pratique estimée est comprise entre la courbe d'iso-sollicitation thermique statique *Iso_{statique}* et la courbe d'iso-sollicitation thermique maximale *Isoₘₐₓ, zone II* sur la figure 3, les moyens d'asservissement 23 du couple moteur réalisent une limitation du couple moteur dans une étape finale 370. Les conditions de roulage du véhicule automobile correspondant à la *zone II* correspondent à des variations de températures illustrées par les courbes Cₐ, C_{b} et C_{c} sur la figure 4.

La zone, *zone III* sur la figure 3, correspondant à une courbe estimée de force de résistance à l'avancement en fonction d'une masse pratique supérieure à la courbe d'iso-sollicitation thermique maximale *Isoₘₐₓ* est asymptotique. Elle ne peut donc jamais être atteinte au sens où la courbe d'iso-sollicitation thermique maximale *Isoₘₐₓ,* correspondant au point de calage pour des caractéristiques données du moteur, du convertisseur hydraulique, de la transmission et de la masse du véhicule, et pour des conditions maximales de température ambiante du véhicule ou du compartiment moteur, peut être considérée comme une limite absolue pratique.

Dans l'étape finale 380, les moyens d'asservissement 23 du couple moteur déterminent un taux de réduction du couple moteur ou bien une valeur limitée de couple moteur à appliquer au moteur 11 afin de réduire la température d'huile dans le convertisseur de couple hydraulique 13.

La détermination du gradient de température permet donc de déduire, via une estimation de force de résistance à l'avancement en fonction d'une masse pratique, le temps durant lequel le véhicule automobile peut fonctionner avec un régime et un couple moteur important avant d'atteindre la température de surchauffe T_{surchauffe} de l'huile, et ainsi d'anticiper le comportement du véhicule automobile. La détermination du gradient de température *Grad(T)* permet donc de connaître le temps pendant lequel le couple moteur maximal permettant d'obtenir une force de franchissement maximale est disponible pour une courbe de force donnée de résistance à l'avancement en fonction de la masse pratique.

Sur la figure 4, la courbe Cₑ illustre des conditions de roulage considérées comme normales, c'est-à-dire pour lesquelles le seuil d'activation T_{activation} ne sera pas dépassé et donc le système de commande 20 ne sera pas activé.

L'invention permet ainsi de réaliser à chaque instant le meilleur compromis possible entre la tenue thermique de la transmission automatique et la force de franchissement maximale exercée à l'encontre de la force de résistance à l'avancement en fonction de la masse pratique du véhicule, et ce sans utiliser de capteurs ou de moyens supplémentaires permettant de renseigner les informations sur les conditions de charge du véhicule automobile imposées par le terrain.

De plus, l'invention permet au véhicule automobile de bénéficier d'une réserve de force de franchissement permettant le franchissement d'obstacles tel que des souches ou des trous alors que le véhicule se trouve déjà dans une zone à forte résistance à l'avancement, comme une forte pente ou un terrain sableux, et ce sans risquer de dégrader les éléments constitutifs du convertisseur de couple hydraulique de la transmission.

La gestion en temps réel et de façon continue de l'adaptation du couple moteur aux circonstances environnantes, c'est-à-dire à la force de résistance à l'avancement du véhicule, permet d'anticiper le comportement du véhicule automobile et, par conséquent, de donner un maximum de confiance au conducteur dans le comportement de son véhicule automobile qui reste homogène et prévisible. En asservissant le couple moteur transmis au convertisseur de couple hydraulique par rapport à la courbe estimée de force de résistance à l'avancement en fonction de la masse pratique, il est possible d'anticiper les situations critiques et d'éviter une rupture de couple aux roues liée à une telle situation. Les corrections circonstancielles du couple appliqué aux roues ne sont jamais brutales, ne projetant pas, sans prévenir, le conducteur et son véhicule dans des situations périlleuses pouvant manifestement les mettre instantanément en danger, ainsi que les passagers ou tiers.

Par ailleurs, l'invention permet d'accroître, pour des masses pratiques de véhicule plus faibles ou des températures ambiantes plus faibles, la capacité de franchissement par rapport à celle pour laquelle, à masse maximale du véhicule, le dimensionnement des échangeurs thermiques a été défini. De plus, la capacité de franchissement n'est pas unilatéralement altérée et bornée à un niveau en deçà de ce que les autres paramètres et caractéristiques du véhicule autorisent à priori.

L'invention est également robuste aux différences de masse pratique de véhicules automobiles, pente gravies, et natures du terrain. Le processus de calibration de l'invention est simple puisqu'il suffit d'effectuer une caractérisation de quelques minutes seulement pour que le dispositif soit opérationnel et adapté au véhicule considéré.

L'invention n'exclut pas l'utilisation d'un éventuel capteur de pente instantanée, des informations issues d'un dispositif de guidage ou de positionnement par satellite, d'informations susceptibles de renseigner la masse réelle du véhicule.

## Revendications

1. Système de commande (20) d'un groupe motopropulseur d'un véhicule automobile, le groupe motopropulseur (20) étant apte à délivrer un couple moteur à un convertisseur de couple hydraulique (13), et comprenant des moyens de détermination (21) d'un gradient de température de l'huile du convertisseur de couple hydraulique (13), **caractérisé en ce qu'**il comprend des moyens d'estimation (22) d'une courbe de force de résistance à l'avancement du véhicule automobile en fonction d'une masse pratique du véhicule automobile à partir dudit gradient de température, et des moyens d'asservissement (23) dudit couple moteur en fonction de ladite estimation.

2. Système selon la revendication 1, comprenant un capteur (30) de température apte à mesurer la température de l'huile dans le convertisseur de couple hydraulique (13) et couplé aux moyens de détermination (21), les moyens de détermination déterminant le gradient de température à partir de la différence entre deux mesures de température d'huile séparées d'une période critique (t_{critique}).

3. Système selon l'une des revendications 1 ou 2, dans lequel les moyens d'asservissement (23) comprennent un module de limitation du couple moteur apte à déterminer un couple moteur limité lorsque la courbe de force de résistance à l'avancement en fonction d'une masse pratique estimée est comprise entre une courbe d'iso-sollicitation thermique statique (Iso_{statique}) et une courbe d'iso-sollicitation thermique maximale(Isoₘₐₓ), la courbe d'iso-sollicitation thermique statique (Iso_{statique}) correspondant à la force maximale de résistance à l'avancement en fonction de la masse pratique pour laquelle la température de l'huile reste inférieure à une température de surchauffe (T_{surchauffe}) quelle que soit la valeur du couple moteur et le temps pendant lequel il est développé, et la courbe d'iso-sollicitation thermique maximale (Isoₘₐₓ) correspondant à la force de résistance à l'avancement du point de calage du convertisseur de couple hydraulique (13).

4. Système selon l'une des revendications 1 à 3, **caractérisé en ce qu'**il comprend un module d'activation (24) couplé au capteur de température (30) et apte à activer le système de commande (20) lorsque la température de l'huile est supérieure à une température d'activation (T_{activation}), la température d'activation (T_{activation}) correspondant à la température maximale observée pour des conditions normales de roulage du véhicule.

5. Système selon la revendication 4, dans lequel le module d'activation (24) est apte à désactiver le système de commande (20) lorsque la température de l'huile est inférieure à une température de désactivation, la température de désactivation correspondant à une température indicative d'un retour à des conditions normales de roulage du véhicule.

6. Système selon l'une des revendications 1 à 5, dans lequel la période critique (t_{critique}) correspond au temps que met l'huile pour passer de la température d'activation (T_{activation}) à ladite température de surchauffe (T_{surchauffe}) lorsque le gradient de température correspond au gradient de température du point de calage.

7. Procédé de commande d'un groupe motopropulseur d'un véhicule automobile le groupe motopropulseur étant apte à délivrer un couple moteur à un convertisseur de couple hydraulique (13) et comprenant la détermination d'un gradient de température de l'huile du convertisseur de couple hydraulique (13), **caractérisé en ce qu'**il comprend l'estimation d'une courbe de force de résistance à l'avancement du véhicule automobile en fonction d'une masse pratique du véhicule automobile à partir dudit gradient de température, et un asservissement dudit couple moteur en fonction de ladite estimation.

8. Procédé selon la revendication 7, dans lequel le gradient de température est déterminé à partir de la différence entre deux mesures de température de l'huile séparées d'une période critique (t_{critique}).

9. Procédé selon l'une des revendications 7 ou 8, dans lequel l'asservissement du couple moteur réalise une limitation du couple moteur lorsque la courbe de force de résistance à l'avancement en fonction d'une masse pratique estimée est comprise entre une courbe d'iso-sollicitation thermique statique (Iso_{statique}) et une courbe d'iso-sollicitation thermique maximale (Isoₘₐₓ), la courbe d'iso-sollicitation thermique statique (Iso_{statique}) correspondant à la force maximale de résistance à l'avancement en fonction de la masse pratique pour laquelle la température de l'huile reste inférieure à une température de surchauffe (T_{surchauffe}) quelle que soit la valeur du couple moteur et le temps pendant lequel il est développé, et la courbe d'iso-sollicitation thermique maximale (Isoₘₐₓ) correspondant à force de résistance à l'avancement en fonction de la masse pratique du point de calage du convertisseur de couple hydraulique.

10. Procédé selon l'une des revendications 7 à 9, dans lequel l'asservissement du couple moteur est activé lorsque la température de l'huile est supérieure à une température d'activation (T_{activation}), la température d'activation (T_{activation}) correspondant à la température maximale observée pour des conditions normales de roulage du véhicule.

11. Procédé selon l'une des revendications 7 à 10, dans lequel la période critique (t_{critique}) correspond au temps que met l'huile pour passer de la température d'activation (T_{activation}) à ladite température de surchauffe (T_{surchauffe}) lorsque le gradient de température correspond au gradient de température du point de calage.

## Patentansprüche

1. System zur Steuerung (20) eines Antriebsstrangs eines Kraftfahrzeugs, wobei der Antriebsstrang (20) dafür ausgelegt ist, ein Motordrehmoment auf einen hydraulischen Drehmomentwandler (13) zu übertragen, und Mittel zur Bestimmung (21) eines Temperaturgradienten des Öls des hydraulischen Drehmomentwandlers (13) umfasst,
**dadurch gekennzeichnet, dass** es Mittel zur Schätzung (22) einer Kurve der Fahrwiderstandskraft des Kraftfahrzeugs in Abhängigkeit von einer praktischen Masse des Kraftfahrzeugs anhand des Temperaturgradienten und Mittel zur Regelung (23) des Motordrehmoments in Abhängigkeit von der Schätzung umfasst.

2. System nach Anspruch 1, welches einen Temperatursensor (30) umfasst, der dafür ausgelegt ist, die Temperatur des Öls im hydraulischen Drehmomentwandler (13) zu messen, und mit den Bestimmungsmitteln (21) gekoppelt ist, wobei die Bestimmungsmittel den Temperaturgradienten aus der Differenz zwischen zwei Messwerten der Öltemperatur bestimmen, die durch einen kritischen Zeitraum (tkritisch) getrennt sind.

3. System nach Anspruch 1 oder 2, wobei die Regelungsmittel (23) ein Modul zur Begrenzung des Motordrehmoments umfassen, das dafür ausgelegt ist, ein begrenztes Motordrehmoment zu bestimmen, wenn die geschätzte Kurve der Fahrwiderstandskraft in Abhängigkeit von einer praktischen Masse zwischen einer Kurve gleicher statischer thermischer Beanspruchung (Iso_{statisch}) und einer Kurve gleicher maximaler thermischer Beanspruchung (Isoₘₐₓ) liegt, wobei die Kurve gleicher statischer thermischer Beanspruchung (Iso_{statisch}) der maximalen Fahrwiderstandskraft in Abhängigkeit von der praktischen Masse entspricht, für welche die Temperatur des Öls niedriger als eine Überhitzungstemperatur (T_{überhitzung}) bleibt, unabhängig vom Wert des Motordrehmoments und der Zeit, während der es entwickelt wird, und wobei die Kurve gleicher maximaler thermischer Beanspruchung (Isoₘₐₓ) der Fahrwiderstandskraft des Festbremspunktes des hydraulischen Drehmomentwandlers (13) entspricht.

4. System nach einem der Ansprüche 1 bis 3, **dadurch gekennzeichnet, dass** es ein Aktivierungsmodul (24) umfasst, das mit dem Temperatursensor (30) gekoppelt ist und dafür ausgelegt ist, das Steuerungssystem (20) zu aktivieren, wenn die Temperatur des Öls höher als eine Aktivierungstemperatur (T_{Aktivierung}) ist, wobei die Aktivierungstemperatur (T_{Aktivierung}) der maximalen Temperatur entspricht, die unter normalen Fahrbedingungen des Fahrzeugs beobachtet wird.

5. System nach Anspruch 4, wobei das Aktivierungsmodul (24) dafür ausgelegt ist, das Steuerungssystem (20) zu deaktivieren, wenn die Temperatur des Öls niedriger als eine Deaktivierungstemperatur ist, wobei die Deaktivierungstemperatur einer Temperatur entspricht, die für eine Rückkehr zu normalen Fahrbedingungen des Fahrzeugs indikativ ist.

6. System nach einem der Ansprüche 1 bis 5, wobei der kritische Zeitraum (tkritisch) der Zeit entspricht, die das Öl benötigt, um von der Aktivierungstemperatur (T_{Aktivierung}) zur Überhitzungstemperatur (T_{überhitzung}) überzugehen, wenn der Temperaturgradient dem Temperaturgradienten des Festbremspunktes entspricht.

7. Verfahren zur Steuerung eines Antriebsstrangs eines Kraftfahrzeugs, wobei der Antriebsstrang dafür ausgelegt ist, ein Motordrehmoment auf einen hydraulischen Drehmomentwandler (13) zu übertragen, und die Bestimmung eines Temperaturgradienten des Öls des hydraulischen Drehmomentwandlers (13) umfassend,
**dadurch gekennzeichnet, dass** es umfasst:
die Schätzung einer Kurve der Fahrwiderstandskraft des Kraftfahrzeugs in Abhängigkeit von einer praktischen Masse des Kraftfahrzeugs anhand des Temperaturgradienten und eine Regelung des Motordrehmoments in Abhängigkeit von der Schätzung.

8. Verfahren nach Anspruch 7, wobei der Temperaturgradient aus der Differenz zwischen zwei Temperaturmesswerten des Öls bestimmt wird, die durch einen kritischen Zeitraum (tkritisch) getrennt sind.

9. Verfahren nach einem der Ansprüche 7 oder 8, wobei die Regelung des Motordrehmoments eine Begrenzung des Motordrehmoments vornimmt, wenn die geschätzte Kurve der Fahrwiderstandskraft in Abhängigkeit von einer praktischen Masse zwischen einer Kurve gleicher statischer thermischer Beanspruchung (Iso_{statisch}) und einer Kurve gleicher maximaler thermischer Beanspruchung (Isoₘₐₓ) liegt, wobei die Kurve gleicher statischer thermischer Beanspruchung (Iso_{statisch}) der maximalen Fahrwiderstandskraft in Abhängigkeit von der praktischen Masse entspricht, für welche die Temperatur des Öls niedriger als eine Überhitzungstemperatur (T_{überhitzung}) bleibt, unabhängig vom Wert des Motordrehmoments und der Zeit, während der es entwickelt wird, und wobei die Kurve gleicher maximaler thermischer Beanspruchung (Isoₘₐₓ) der Fahrwiderstandskraft in Abhängigkeit von der praktischen Masse des Festbremspunktes des hydraulischen Drehmomentwandlers entspricht.

10. Verfahren nach einem der Ansprüche 7 bis 9, wobei die Regelung des Motordrehmoments aktiviert wird, wenn die Temperatur des Öls höher als eine Aktivierungstemperatur (T_{Aktivierung}) ist, wobei die Aktivierungstemperatur (T_{Aktivierung}) der maximalen Temperatur entspricht, die unter normalen Fahrbedingungen des Fahrzeugs beobachtet wird.

11. Verfahren nach einem der Ansprüche 7 bis 10, wobei der kritische Zeitraum (tkritisch) der Zeit entspricht, die das Öl benötigt, um von der Aktivierungstemperatur (T_{Aktivierung}) zur Überhitzungstemperatur (T_{überhitzung}) überzugehen, wenn der Temperaturgradient dem Temperaturgradienten des Festbremspunktes entspricht.

## Claims

1. System (20) for controlling a power train of a motor vehicle, the power train (20) being capable of delivering an engine torque to a hydraulic torque converter (13), and comprising means (21) for determining a temperature gradient of the oil of the hydraulic torque converter (13), **characterized in that** it comprises means (22) for estimating a curve of the force of resistance to forward travel of the motor vehicle depending on a practical mass of the motor vehicle based on said temperature gradient, and means (23) for controlling said engine torque depending on said estimation.

2. System according to Claim 1, comprising a temperature sensor (30) capable of measuring the temperature of the oil in the hydraulic torque converter (13) and coupled to the determination means (21), the determination means determining the temperature gradient based on the difference between two oil temperature measurements separated by a critical period (t_{critical}).

3. System according to either of Claims 1 and 2, wherein the control means (23) comprise a module for limiting the engine torque capable of determining a limited engine torque when the estimated curve of the force of resistance to forward travel depending on a practical mass is between a static thermal iso-stress curve (Iso_{static}) and a maximum thermal iso-stress curve (Isoₘₐₓ), the static thermal iso-stress curve (Iso_{static}) corresponding to the maximum force of resistance to forward travel depending on the practical mass for which the temperature of the oil remains below an overheating temperature (T_{overheating}), whatever the value of the engine torque and the period of time over which it has built up, and the maximum thermal iso-stress curve (Isoₘₐₓ) corresponding to the force of resistance to forward travel of the stall point of the hydraulic torque converter (13).

4. System according to one of Claims 1 to 3, **characterized in that** it comprises an activation module (24) coupled to the temperature sensor (30) and capable of activating the control system (20) when the temperature of the oil is greater than an activation temperature (T_{activation}), the activation temperature (T_{activation}) corresponding to the maximum temperature observed for normal traveling conditions of the vehicle.

5. System according to Claim 4, wherein the activation module (24) is capable of deactivating the control system (20) when the temperature of the oil is below a deactivation temperature, the deactivation temperature corresponding to a temperature indicative of a return to normal traveling conditions of the vehicle.

6. System according to one of Claims 1 to 5, wherein the critical period (t_{critical}) corresponds to the time taken for the oil to pass from the activation temperature (T_{activation}) to said overheating temperature (T_{overheating}) when the temperature gradient corresponds to the temperature gradient of the stall point.

7. Method for controlling a power train of a motor vehicle, the power train being capable of delivering an engine torque to a hydraulic torque converter (13) and comprising the determination of a temperature gradient of the oil of the hydraulic torque converter (13), **characterized in that** it comprises the estimation of a curve of the force of resistance to forward travel of the motor vehicle depending on a practical mass of the motor vehicle based on said temperature gradient, and a control of said engine torque depending on said estimation.

8. Method according to Claim 7, wherein the temperature gradient is determined based on the difference between two measurements of the temperature of the oil separated by a critical period (t_{critical}) .

9. Method according to either of Claims 7 and 8, wherein the control of the engine torque limits the engine torque when the estimated curve of the force of resistance to forward travel depending on a practical mass is between a static thermal iso-stress curve (Iso_{static}) and a maximum thermal iso-stress curve (Isoₘₐₓ), the static thermal iso-stress curve (Iso_{static}) corresponding to the maximum force of resistance to forward travel depending on the practical mass for which the temperature of the oil remains below an overheating temperature (T_{overheating}), whatever the value of the engine torque and the period of time over which it has built up, and the maximum thermal iso-stress curve (Isoₘₐₓ) corresponding to the force of resistance to forward travel depending on the practical mass of the stall point of the hydraulic torque converter.

10. Method according to one of Claims 7 to 9, wherein the control of the engine torque is activated when the temperature of the oil is greater than an activation temperature (T_{activation}), the activation temperature (T_{activation}) corresponding to the maximum temperature observed for normal traveling conditions of the vehicle.

11. Method according to one of Claims 7 to 10, wherein the critical period (t_{critical}) corresponds to the time taken for the oil to pass from the activation temperature (T_{activation}) to said overheating temperature (T_{overheating}) when the temperature gradient corresponds to the temperature gradient of the stall point.
